# EUROPÄISCHE PATENTSCHRIFT

(11) **EP 0 925 595 B1**
(45) Veröffentlichungstag und Bekanntmachung des Hinweises auf die Patenterteilung: **12.07.2000**
(21) Anmeldenummer: 97910211.8
(22) Anmeldetag: 16.09.1997
(51) Int. Cl.: H01H 9/34, H02B 11/173

(54) **FAHRBAR ANGEORDNETER LEISTUNGSSCHALTER MIT EINEM AUSBLASDÄMPFER**
WHEELED CIRCUIT INTERRUPTER PROVIDED WITH A BLOWER-ATTENUATOR
SECTIONNEUR DE PUISSANCE ROULANT AVEC ATTENUATEUR-SOUFFLEUR

(30) Priorität: 16.09.1996 DE 19638948
(43) Veröffentlichungstag der Anmeldung: 30.06.1999
(73) Patentinhaber: SIEMENS AKTIENGESELLSCHAFT, 80333 München (DE)
(72) Erfinder: DEYLITZ, Erhard, D-10405 Berlin (DE)
(86) Internationale Anmeldenummer: DE9702123
(87) Internationale Veröffentlichungsnummer: WO9812721

(56) Entgegenhaltungen:
- EP-A- 0 437 151
- DE-A- 2 165 942

## Beschreibung

Die Erfindung betrifft eine elektrische Schaltanlage mit einem fahrbar angeordneten Leistungsschalter, der eine Lichtbogenlöschkammer aufweist, und einem mit der Lichtbogenlöschkammer zusammenwirkenden Ausblasdämpfer zur Abkühlung und Entionisierung aus der Lichtbogenlöschkammer beim Schalten austretender Schaltgase, wobei der Ausblasdämpfer ortsfest angeordnet ist und eine beim Verfahren des Leistungsschalters mit einer Mündungsfläche der Lichtbogenlöschkammer zusammenwirkende Dichtfläche besitzt.

Ein Leistungsschalter dieser Art ist in zwei Ausführungsformen durch die DE 2 165 942 A1 bekanntgeworden. Bei der einen Ausführungsform ist vorgesehen, daß der Leistungsschalter durch eine geradlinige Fahrbewegung in die Zelle einer Schaltanlage einfahrbar und herausfahrbar ist, wobei die Teilfuge zwischen der Lichtbogenlöschkammer und dem Ausblasdämpfer winklig zur Richtung der Fahrbewegung angeordnet ist, um ein keilartiges Zusammenwirken zu erzielen.

Bei der anderen der beiden erwähnten Ausführungsformen besitzt der Leistungsschalter ein etwa zylindrisches Gehäuse und ist durch eine Drehbewegung in die Schaltanlage einsetzbar. Im Verlauf der Drehbewegung gelangen die Mündungsfläche der Lichtbogenlöschkammer und die Dichtungsfläche des Ausblasdämpfers miteinander in Eingriff.

Zweck des erwähnten Ausblasdämpfers ist es, die beim Schalten des Leistungsschalters auftretenden Schaltgase derart zu beeinflussen, daß sie elektrisch neutrale Eigenschaften aufweisen und daher zwischen der Mündung des Ausblasdämpfers und spannungführenden oder geerdeten Teilen kein Sicherheitsabstand einzuhalten ist.

Für die gewünschte Wirkungsweise der beschriebenen Anordnung ist es wesentlich, daß beim Einfahren des Leistungsschalters in seine Betriebsstellung der Ausblasdämpfer mit der Lichtbogenlöschkammer zuverlässig in Eingriff gebracht wird, damit keine Undichtigkeit auftritt und somit Schaltgase nicht an der Teilfuge zwischen Lichtbogenlöschkammer und Ausblasdämpfers austreten können. Auch ist es erforderlich, für eine ausreichende Beständigkeit gegen den Druck der Schaltgase zu sorgen, um das Schaltvermögen des Leistungsschalters vollständig ausnutzen zu können.

Der Erfindung liegt hiervon ausgehend die Aufgabe zugrunde, die Abdichtung zwischen der Lichtbogenlöschkammer und dem zugeordneten Ausblasdämpfer zu verbessern.

Diese Aufgabe wird gemäß der Erfindung dadurch gelöst, daß der Ausblasdämpfer zwei teleskopartig ineinandergreifend geführte Teilkörper aufweist, von denen der eine Teilkörper ortsfest angeordnet ist und der andere Teilkörper die Dichtfläche aufweist.

Durch die vorgesehene Gestaltung des Ausblasdämpfers wird erreicht, daß der mit der Dichtfläche versehene Teilkörper des Ausblasdämpfers durch den Druck der Schaltgase gegen die Mündungsfläche der Lichtbogenlöschkammer gedrückt und hierdurch die Abdichtung verbessert wird. Unter Umständen kann daher von der Verwendung dem Verschleiß unterliegender Dichtwerkstoffe zwischen der Mündungsfläche der Lichtbogenlöschkammer und der Dichtfläche des Ausblasdämpfers abgesehen werden.

Leistungsschalter der hier betrachteten Bauart weisen im allgemeinen eine nach oben offene Lichtbogenlöschkammer auf. Daher befindet sich auch der Ausblasdämpfer oberhalb des Leistungsschalters. Die vorgesehene teleskopartige Bauart des Ausblasdämpfers führt also dazu, daß der mit der Dichtfläche versehene Teilkörper mit seinem Eigengewicht auf der Mündungsfläche der Lichtbogenlöschkammer aufliegt. Der hierdurch gegebene Minimalwert der Abdichtung kann im Rahmen der Erfindung dadurch gesteigert werden, daß der mit der Dichtfläche versehene Teilkörper des Ausblasdämpfers durch wenigstens eine Feder gegen die Lichtbogenlöschkammer vorgespannt ist. Eine solche Feder kann in gleichfalls teleskopartig ineinandergreifenden Abschnitten der Teilkörper angeordnet sein, um die Feder gegen den Einfluß der Schaltgase zu schützen.

Die Erfindung wird im folgenden anhand des in den Figuren dargestellten Ausführungsbeispieles näher erläutert.

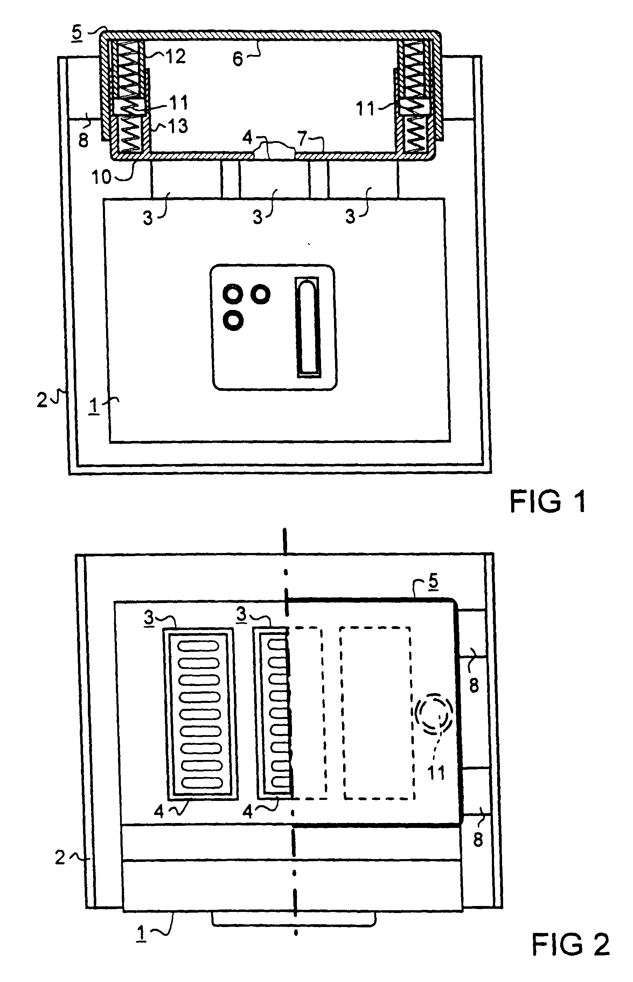

Die Figur 1 zeigt einen fahrbar angeordneten Leistungsschalter mit einem Ausblasdämpfer in einer teilweise geschnittenen Frontansicht.

Die Anordnung gemäß der Figur 1 ist in der Figur 2 in der Draufsicht gezeigt, und zwar links einer strichpunktierten Linie ohne Ausblasdämpfer.

Wie näher den Figuren 1 und 2 zu entnehmen ist, ist ein Leistungsschalter 1 in einem Einschubrahmen 2 fahrbar angeordnet. In bekannter Weise kann der Leistungsschalter 1 in dem Einschubrahmen 2 eine Trennstellung, eine Teststellung und eine Betriebsstellung einnehmen. Von der Darstellung eines Fahrantriebes, von Führungsmitteln und Trennkontaktanordnungen wird im vorliegenden Zusammenhang angesehen, da diese Elemente allgemein bekannt sind und beispielsweise in der eingangs erwähnten DE 2 165 942 A1 bzw. der DE 44 20 582 A1 oder DE 44 20 584 A1 beschrieben sind. In der Figur 2 ist rechts einer strichpunktierten Linie der Leistungsschalter 1 mit einem aufgesetzten Auslasdämpfer 5 gezeigt, während links der genannten Linie der Ausblasdämpfer fortgelassen ist, um Mündungsflächen 4 von Lichtbogenlöschkammern 3 sichtbar zu machen.

Der Leistungsschalter 1 ist in dem betrachteten Beispiel ein dreipoliger Niederspannungs-Leistungsschalter, dessen Lichtbogenlöschkammern 3 nach oben offen sind und dort die Mündungsflächen 4 aufweisen. Oberhalb des Leistungsschalters 1 ist ein Ausblasdämpfer 5 angeordnet. Dieser besteht aus zwei teleskopartig ineinandergreifend geführten Teilkörpern 6 und 7, wobei der eine Teilkörper 6 mittels schematisch angedeuteter Halteorgane 8 an dem Einschubrahmen 2 befestigt ist. Der andere Teilkörper 7 ist in dem ortsfesten Teilkörper 6 verschiebbar geführt und weist eine Dichtungsfläche 10 auf.

In der an sich bekannten Weise werden beim Einfahren des Leistungsschalters 1 in seine Betriebsstellung innerhalb des Einschubrahmens 2 die Mündungsflächen 4 der Lichtbogenlöschkammern 3 mit der Dichtfläche 10 in Eingriff gebracht. Dabei liegt der innere Teilkörper 7 des Ausblasdämpfers 5 unter seinem Eigengewicht auf den Lichtbogenlöschkammern 3 auf.

Beim Schalten des Leistungsschalters 1 treten die Schaltgase aus den Lichtbogenlöschkammern 3 in den Ausblasdämpfer 5 ein, aus dem sie abgekühlt und entionisiert an die Umgebung abgegeben werden. Aufgrund der teleskopartigen Führung des inneren Teilkörpers 7 in dem äußeren und ortsfest abgestützen Teilkörper 6 bewirkt der Druck der Schaltgase eine Erhöhung der Andruckkraft zwischen der Dichtfläche 10 und den Mündungsflächen 4.

Um die Dichtigkeit der beschriebenen Anordnung bereits im Ruhezustand zu verbessern, sind in dem gezeigten Ausführungsbeispiel zwei Federn 11 vorgesehen, die den inneren Teilkörper 7 gegen die Mündungsflächen 4 drücken. Die Federn 11 sind gegen einen korrosiven Einfluß der Schaltgase dadurch geschützt, daß sie in gleichfalls teleskopartig zusammenwirkenden Abschnitten 12 und 13 der Teilkörper 6 und 7 angeordnet sind. Von der Größe des Ausblasdämpfers 5 und seiner Proportionen hängt es ab, ob es zweckmäßig sein kann, eine größere oder kleinere Anzahl von Federn 11 vorzusehen.

## Patentansprüche

1. Elektrische Schaltanlage mit einem fahrbar angeordneten Leistungsschalter (1), der eine Lichtbogenlöschkammer (3) aufweist, und einem mit der Lichtbogenlöschkammer (3) zusammenwirkenden Ausblasdämpfer (5) zur Abkühlung und Entionisierung aus der Lichtbogenlöschkammer (3) beim Schalten austretender Schaltgase, wobei der Ausblasdämpfer (5) ortsfest angeordnet ist und eine beim Verfahren des Leistungsschalters (1) mit einer Mündungsfläche (4) der Lichtbogenlöschkammer (3) zusammenwirkende Dichtfläche (10) besitzt,
**dadurch gekennzeichnet,** daß
der Ausblasdämpfer (5) zwei teleskopartig ineinandergreifend geführte Teilkörper (6, 7) aufweist, von denen der eine Teilkörper (6) ortsfest angeordnet ist und der andere Teilkörper (7) die Dichtfläche (10) aufweist.

2. Elektrische Schaltanlage nach Anspruch 1,
**dadurch gekennzeichnet,** daß
der mit der Dichtfläche (10) versehene Teilkörper (7) des Ausblasdämpfers (5) durch wenigstens eine Feder (11) gegen die Lichtbogenlöschkammer (3) vorgespannt ist.

3. Elektrische Schaltanlage nach Anspruch 2,
**dadurch gekennzeichnet,** daß
die Feder (11) in dem von den Teilkörpern (6, 7) umschlossenen Raum in gleichfalls teleskopartig ineinandergreifenden Abschnitten (12, 13) der Teilkörper (6, 7) angeordnet ist.

## Claims

1. Electrical switchgear assembly having a circuit breaker (1) which is arranged such that it can be moved and has an arc quenching chamber (3), and having a blow-out evaporator (5), which interacts with the arc quenching chamber (3), for cooling and deionization of switching gases that emerge from the arc quenching chamber (3) during switching, in which case the blow-out evaporator (5) is arranged in a fixed position and has a sealing surface (10) which, during movement of the circuit breaker (1), interacts with an opening area (4) of the arc quenching chamber (3),
characterized in that
the blow-out evaporator (5) has two body elements (6, 7) which are guided such that they engage in one another like a telescope, one of which body elements (6) is arranged in a fixed position, and the other body element (7) has the sealing surface (10).

2. Electrical switchgear assembly according to Claim 1,
characterized in that
that body element (7) of the blow-out evaporator (5) which is provided with the sealing surface (10) is prestressed against the arc quenching chamber (3) by means of at least one spring (11).

3. Electrical switchgear assembly according to Claim 2,
characterized in that
the spring (11) is arranged in the space enclosed by the body elements (6, 7), in sections (12, 13) of the body elements (6, 7) which likewise engage in one another like a telescope.

## Revendications

1. Installation de commutation électrique, comprenant un disjoncteur (1) mobile qui comporte une chambre (3) d'extinction d'arc et un atténuateur (5) souffleur coopérant avec la chambre (3) d'extinction d'arc afin de refroidir et de désioniser les gaz de commutation qui sortent de la chambre (3) d'extinction d'arc lors de la commutation, l'atténuateur (5) souffleur étant disposé en un emplacement fixe et possédant une face (10) d'étanchéité qui coopère avec une face (4) d'embouchure de la chambre (3) d'extinction d'arc lorsque le disjoncteur (1) est déplacé,
**caractérisée** en ce que l'atténuateur (5) souffleur comporte deux sous-corps (6, 7) guidés en engagement télescopique l'un dans l'autre, l'un (6) des sous-corps étant disposé en un emplacement fixe et l'autre (7) sous-corps comportant la face (10) d'étanchéité.

2. Installation de commutation électrique suivant la revendication 1, **caractérisée** en ce que le sous-corps (7) de l'atténuateur (5) souffleur, qui est pourvu de la face (10) d'étanchéité, est précontraint contre la chambre (3) d'extinction d'arc par au moins un ressort (11).

3. Installation de commutation électrique suivant la revendication 2, **caractérisée** en ce que le ressort (11) est disposé dans l'espace enfermé par les sous-corps (6, 7), dans des parties (12, 13) des sous-corps (6, 7) qui s'engagent de même télescopiquement l'une dans l'autre.
